# EUROPEAN PATENT SPECIFICATION

(11) **EP 3 882 439 B1**
(45) Date of publication and mention of the grant of the patent: **01.11.2023**
(21) Application number: 21161143.9
(22) Date of filing: 05.03.2021
(51) Int. Cl.: F01M 11/00, F01M 11/02, F02F 7/00, F02B 29/00

(54) **AN ENGINE ASSEMBLY**
MOTORBAUGRUPPE
ENSEMBLE MOTEUR

(30) Priority: 20.03.2020 GB 202004113
(43) Date of publication of application: 22.09.2021
(73) Proprietor: Perkins Engines Company Limited, Cambridgeshire PE1 5FQ (GB)
(72) Inventor: KERSS, Geoffrey, Peterborough, PE1 5FQ (GB); ELSE, Owen, Peterborough, PE1 5FQ (GB); RAMASAMY, Prabhu, Peterborough, PE7 8RF (GB); CHATZAKIS, Menelaos, Peterborough, PE4 6QP (GB)
(74) Representative: Novagraaf Group

(56) References cited:
- FR-A1- 3 023 591
- US-A- 4 771 745
- US-A- 4 815 419

## Description

### Technical Field

This disclosure is directed towards an engine assembly and a method of operating an engine assembly.

### Background

Machines, including backhoe loaders, excavators, loaders and the like, commonly comprise an engine assembly including an engine, particularly an internal combustion engine, for providing power for driving the machine and operating its components. The engine typically comprises a crankshaft rotating within a crankcase and a lubrication system typically distributes lubricant through the crankshaft and into the crankcase. Engine assemblies also commonly comprise a turbocharger driven by exhaust gases from the engine and for compressing intake gas entering the engine to increase its power output.

The turbocharger may also receive lubricant from the lubrication system and the lubricant may be returned to the crankcase via a lubricant drain. However, high pressure in the crankcase may force lubricant and/or high pressure back into the lubricant drain, such as due to crankshaft windage, and cause a differential pressure in the turbocharger. As a result, seals in the turbocharger may be compromised and lubricant may leak from the turbocharger.

KR101251711 B1 discloses a closed crankcase ventilator for preventing oil backdraft expelled into an oil pan and to supply blow-by gas into an intake port of an engine. However, such a ventilator requires an additional device and system components in the engine assembly and also may increase pressure locally around the ventilator.

FR3023591A1, entitled "Internal combustion engine comprising an engine block provided with an oil baffle," discloses an internal combustion engine comprising at least one engine block, at least one return pipe connected to the engine block to ensure a return to the engine of the oil and a deflector arranged inside the engine block to deflect the oil leaving said return pipe so as to prevent said oil from flows directly over at least one rotating member of the engine, characterized in that said deflector is integrated into the engine block.

US4771745A, entitled "Structure of internal combustion engine," discloses a structure of internal combustion engine comprising a cylinder member composed of a cylinder which accommodates a piston connected with a crankshaft, a crankcase provided to accommodate said crankshaft, a rocker case provided to accommodate a valve actuating mechanism, an oil return passage constituting means for leading oil in said rocker case into said crankcase, and a restraining means for restraining an air flow within said crankcase from entering into said oil return passage constituting means.

US4815419A, entitled "Engine cooling apparatus," discloses an engine cooling apparatus which cools a cylinder head and a cylinder block which are positioned around upper and lower portions of an engine combustion chamber. The cylinder block includes cylinder liners disposed in an oil jacket which is supplied with oil from an oil circulating system via a pressure reducing valve. Oil in the oil jacket returns through a return path into an oil reservoir in the engine.

### Summary

The present disclosure therefore provides an engine assembly according to claim 1.

The present disclosure further provides a method of operating the aforementioned engine assembly comprising: rotating the crankshaft and thereby drive the crankcase fluid flow in the crankcase chamber; and operating the lubrication system such that drain fluid flow passes through the lubricant drain to the drain aperture, wherein the fluid guide arrangement guides the crankcase fluid flow away from the drain aperture and/or reduces the pressure of the crankcase fluid flow past the drain aperture, such that the drain fluid flows from the lubricant drain.

### Brief Description of the Drawings

By way of example only, embodiments of apparatuses and methods of the present disclosure are now described with reference to, and as shown in, the accompanying drawings, in which:
Figure 1 is a schematic of an engine assembly according to the present disclosure;
Figure 2 is a cross-sectional side elevation through a piston of an engine of the engine assembly of Figure 1;
Figure 3 is a cross-sectional side elevation through a piston of a further embodiment of an engine of the engine assembly of Figure 1;
Figure 4 is a cross-sectional side elevation through a crankshaft web of a further embodiment of an engine of the engine of the engine assembly of Figure 1; and
Figure 5 is a cross-sectional side elevation through a crankshaft web of a further embodiment of an engine of the engine of the engine assembly of Figure 1

### Detailed Description

The present disclosure is generally directed towards an engine assembly in which a fluid guide arrangement is configured to reduce the impact of windage effects upon lubricant draining from a lubricant drain. In particular, the fluid guide arrangement guides fluid flow in the crankcase in order to assist the fluid flow from the lubricant drain. The fluid guide arrangement may guide the drain fluid flow by directing the crankcase fluid flow away from the lubricant drain and/or by inducing a negative pressure in the crankcase fluid flow to draw the drain fluid flow out of the lubricant drain.

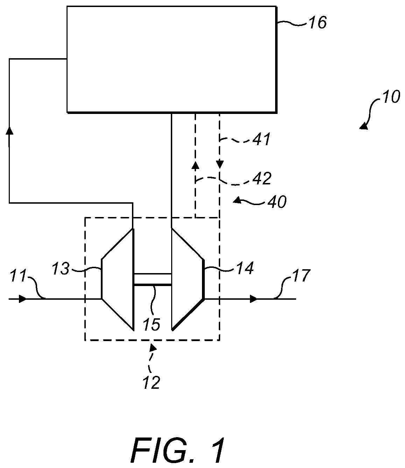

Figure 1 illustrates an exemplary embodiment of an engine assembly 10 according to the present disclosure. The engine assembly 10 may comprise an air intake system 11 for directing intake gas, such as atmospheric air, to a turbocharger 12. The turbocharger 12 may comprise a compressor 13 in fluid communication with the air intake system 11 and the compressor 13 may be arranged to be driven by a turbine 14 via a shaft 15.

The engine assembly 10 further comprises an engine 16, which may be arranged to receive compressed intake gas from the compressor 13. The engine 16 may be in fluid communication with and direct exhaust gas to the turbine 14 for driving the turbine 14. The turbine 14 may be in fluid communication with an exhaust system 17 for directing exhaust gas out of the engine assembly 10 to atmosphere.

Although not illustrated, the engine assembly 10 may comprise a supercharger for further compressing intake gas entering the engine 16, an exhaust gas recirculation system, an aftertreatment system for treating the exhaust gas in the exhaust system 17 to remove pollutants prior to directing the exhaust gas to atmosphere and the like.

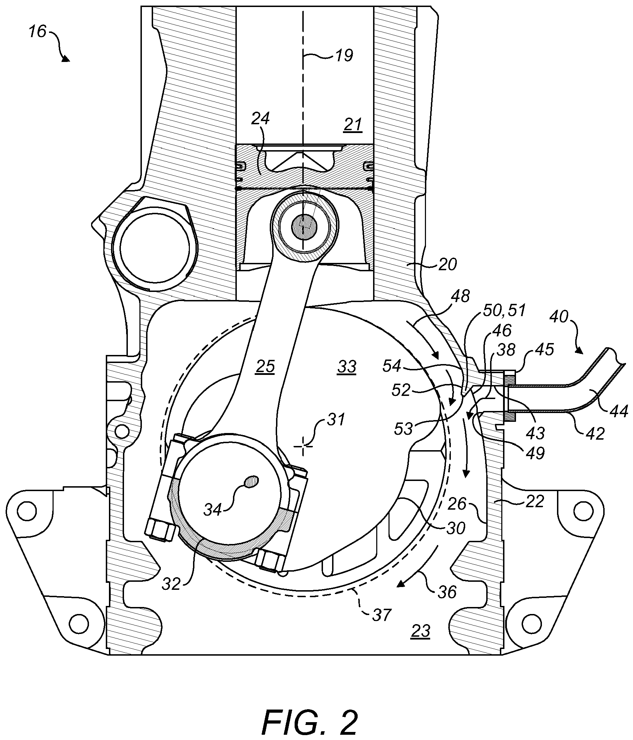

The engine 16 may be an internal combustion engine, such as a compression-ignition or spark-ignition engine, and an embodiment thereof is illustrated in further detail in Figure 2. The engine 16 comprises a crankcase 22. The engine 16 may comprise an engine block 20, which may comprise at least one engine cylinder 21 and the crankcase 22. The at least one engine cylinder 21 may comprise at least one bore in the engine block 20 and the crankcase 22 may be integrated within the engine block 20 (for example the crankcase 22 and at least one bore may be formed by a unitary engine block 20). The engine block 20 may be cast comprising the at least one engine cylinder 21 and at least part of the crankcase 22, such as at least an upper portion of the crankcase 22 as illustrated.

The crankcase 22 comprises a crankcase chamber 23 formed at least partially within a crankcase inner surface 26 of the crankcase 22. A lower part of the crankcase 22 (i.e. opposite to the at least one engine cylinder 21) may be open and a lower housing (not shown) may be attached to the crankcase 22 to enclose the crankcase chamber 23 within the engine block 20, crankcase 22 and lower housing. The lower housing may comprise a lubricant sump pan.

The engine 16 may comprise at least one piston 24 reciprocatively mounted within the at least one engine cylinder 21. The at least one piston 24 may be configured to reciprocate along a piston reciprocating axis 19. The engine 16 may comprise at least one intake valve (not shown) for selectively allowing the intake gas, which may be received from the turbocharger 12 and air intake system 11, to enter the at least one engine cylinder 21. The engine 16 may comprise at least one exhaust valve (not shown) for selectively allowing exhaust gas generated by combustion to exit the at least one engine cylinder 21, which may exit the engine assembly 10 via the turbocharger 12 and exhaust system 17.

The engine 16 comprises a crankshaft 30 rotatably mounted in the crankcase 22 and in the crankcase chamber 23. The crankshaft 30 may be rotatable in a crankshaft rotation direction 36 about a crankshaft axis 31. The at least one piston 24 may be mounted to the crankshaft 30 by at least one connecting rod 25 and the crankshaft 30 may be configured, upon rotation about the crankshaft axis 31, to provide a power output from the engine 16.

Fuel, such as diesel, petrol or natural gas, may be selectively provided to the at least one engine cylinder 21 to combust with the intake gas and drive the at least one piston 24, thereby rotating the crankshaft 30 and providing an engine 16 output torque and power.

The crankshaft 30 may be mounted on main bearings (not shown) of the engine 16. The crankshaft 30 may comprise journals 32. The journals 32 may comprise at least one rod journal 32 (as shown in Figure 2) to which the at least one connecting rod 25 may be rotatably mounted and may comprise at least one main journal (not shown) for rotatably mounting in the main bearings. The at least one rod journal 32 may be offset from the crankshaft axis 31 and the at least one main journal may be aligned with the crankshaft axis 31.

The crankshaft 30 may comprise at least one crankshaft web 33, which may connect and extend between adjacent rod journals 32. The at least one crankshaft web 33 may trace and/or form a crankshaft outer perimeter 37 of the crankshaft 30 during its rotation. As the at least one crankshaft web 33 forms the outermost diameter of the crankshaft 30, the crankshaft outer perimeter 37 may represent the outermost limit of reach of the crankshaft 30 through its entire rotation.

The engine assembly 10 comprises a lubrication system 40 for distributing lubricant, such as oil, therearound. The lubrication system 40 may comprise a lubricant sump or reservoir, which may be in the lower housing in the form of the lubricant sump pan. The lubrication system 40 may comprise at least one pump (not shown) for pumping lubricant around it.

The lubrication system 40 may comprise a crankshaft lubrication system 34 for distributing lubricant to the journals 32 and, as illustrated, the crankshaft lubrication system 34 may comprise at least one duct formed within the crankshaft 30. The at least one pump may direct lubricant through the crankshaft 30 to the journals 32. The lubricant may be ejected from the journals 32 into the crankcase chamber 23 and collected in the lubricant sump.

The lubrication system 40 comprises a lubricant drain 42 for a drain fluid flow 38 therethrough. The drain fluid may comprise lubricant and/or air or gas and the lubricant drain 42 may be for returning the drain fluid to the sump. As illustrated in Figures 2 to 5, the lubricant drain 42 may extend through the engine block 20 and crankcase 22 to the crankcase chamber 23 such that drain fluid flowing therethrough may be directed towards the lubricant sump. The lubrication system 40 comprises a drain aperture 46 at the crankcase inner surface 26 and the lubricant drain 42 extends to the drain aperture 46.

The lubricant drain 42 may comprise at least one drain passageway 43 extending through the crankcase 22 and to the drain aperture 46. The at least one drain passageway 43 may comprise at least one bore through, and optionally cast or drilled in, the engine block 20. The lubricant drain 42 may comprise at least one drain tube 44 mounted to the at least one drain passageway 43, such as via a drain flange 45.

The lubrication system 40 may distribute lubricant to the turbocharger 12, as illustrated in Figure 1. The lubrication system 40 may therefore comprise a turbocharger lubricant inlet arrangement 41 for directing lubricant from the sump to the turbocharger 12. The lubricant drain 42 may be for directing the drain fluid flow 38, comprising at least part of the lubricant that entered the turbocharger 12, from the turbocharger 12 to the crankcase chamber 23 and therefore onto the lubricant sump. The at least one drain tube 44 may extend to the turbocharger 12 from the at least one drain passageway 43.

However, the lubrication system 40 may distribute lubricant to other components of the engine assembly 10 and the lubricant drain 42 may be configured to return drain fluid from any such component. The lubrication system 40 may therefore comprise a plurality of lubricant drains 42 leading from different components.

The crankshaft 30 is configured to drive, and drives during use, a crankcase fluid flow 48 in the crankcase chamber 23. The crankcase fluid may comprise lubricant, such as that sprayed from the lubricant sump and/or crankshaft lubrication system 34 during rotation of the crankshaft 30. The crankcase fluid may comprise a gas, such as the air and/or other exhaust gases or the like within the crankcase chamber 23. The crankshaft 30 may drive such crankcase fluid flow 48 by windage effects. The crankcase fluid flow 48 may be annular around the crankshaft 30 and/or may be between the crankcase 22, particularly the crankcase inner surface 26, and the crankshaft 30. The crankshaft 30 may be configured to drive, and may drive during use, the crankcase fluid flow 48 towards the drain aperture 46. The crankcase fluid flow 48 may extend past the drain aperture 46 and may be in the same direction as the crankshaft rotation direction 36.

The engine 16 comprises a fluid guide arrangement 50 mounted to the crankcase 22 and located adjacent or in proximity to the drain aperture 46. The fluid guide arrangement 50 extends into the crankcase chamber 23 from the crankcase inner surface 26. In particular, the crankcase inner surface 26 may extend around at least about 50% or at least about 60% of the circumference of the crankshaft 30 and the fluid guide arrangement 50 may extend around less than about 50%, less than about 25% or less than about 10% of the circumference of the crankshaft 30. The crankcase inner surface 26 around the crankshaft 30 may be separated from the crankshaft 30 by a greater distance than the fluid guide arrangement 50.

The fluid guide arrangement 50 is configured to guide the crankcase fluid flow 48 as it flows past or in proximity to the drain aperture 46. As a result, the fluid guide arrangement 50 controls the drain fluid flow 38 and/or the drain fluid flows 38 from the lubricant drain 42. The fluid guide arrangement 50 may be configured to change the direction of and/or deflect the crankcase fluid flow 48 from its otherwise substantially circular path around the crankcase chamber 23. The fluid guide arrangement 50 is configured to guide and/or deflect the crankcase fluid flow 48 away from the drain aperture 46. The fluid guide arrangement 50, in addition or alternatively, reduces the pressure of the crankcase fluid flow 48 past the drain aperture 46 (e.g. adjacent to the fluid guide arrangement 50) such that a negative pressure is induced in the crankcase fluid flow 48 relative to the pressure of the drain fluid flow 38 in the lubricant drain 42. Figures 2 to 5 illustrate different embodiments of the fluid guide arrangement 50 in accordance with the present disclosure.

The fluid guide arrangement 50 may comprise a first fluid guide wall 51 mounted to the crankcase 22 and located at least partially over and/or upstream of the drain aperture 46, for example as illustrated in Figures 2 to 5. The term "upstream" may be along a direction opposite to the crankcase fluid flow 48 and may refer to a feature, such as the first fluid guide wall 51, being located around the crankcase inner surface 26 from the drain aperture 46 in a direction opposite to the crankshaft rotation direction 36 and the crankcase fluid flow 48. Therefore, crankcase fluid flow 48 may be driven past the first fluid guide wall 51 before flowing past the drain aperture 46.

Furthermore, the first fluid guide wall 51 may be located above (for example higher than but not necessarily vertically aligned with) the drain aperture 46 when the engine 16 is in its upright configuration as shown in Figures 2 to 5. The first fluid guide wall 51 may guide the crankcase fluid flow 48 as it travels downwardly towards the drain aperture 46. However, if the drain aperture 46 is on the opposing side of the crankcase 22 (for example on the left side in Figure 2 rather than on the right side as shown) the first fluid guide wall 51 may be located below the drain aperture 46 when the engine 16 is in its upright configuration. Thus in such an arrangement the first fluid guide wall 51 may guide the crankcase fluid flow 48 as it travels upwardly towards the drain aperture 46.

The first fluid guide wall 51 may extend into the crankcase chamber 23 toward the crankshaft axis 31 and/or crankshaft 30 and may comprise a first wall surface 52, which may extend between first wall proximal and distal ends 53, 54. The first wall proximal end 53 may be located proximal to the drain aperture 46 and the first wall distal end 54 may be located distal to the drain aperture 46. The first wall proximal end 53 may be downstream of the first wall distal end 54 and may be downstream of the first wall surface 52. The term "downstream" may refer to a feature being located in a direction along the crankshaft rotation direction 36 and crankcase fluid flow 48 and opposite to the upstream direction. The drain and crankcase fluid flows 38, 48 may mix together downstream of the drain aperture 46.

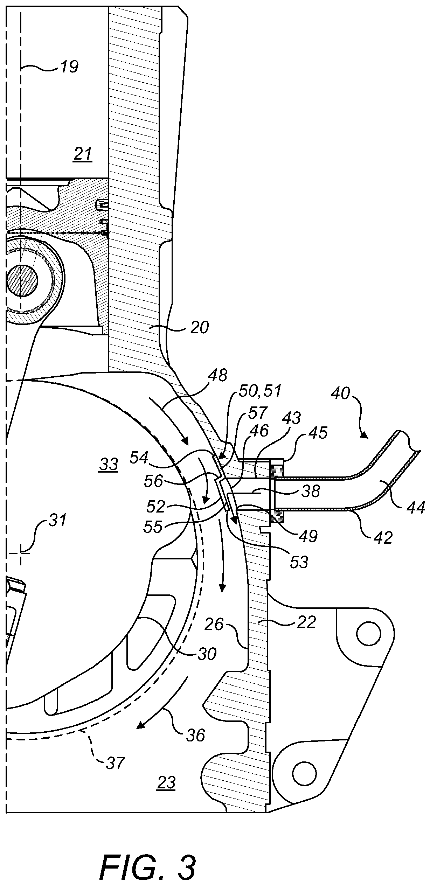

As illustrated in Figures 2 and 3, the first fluid guide wall 51 is configured to deflect or guide fluid away from the drain aperture 46 and the first wall surface 52 may be configured to direct the crankcase fluid flow 48 away from the drain aperture 46 and/or towards the crankshaft 30 and/or crankshaft axis 31. The first wall surface 52 may be configured to guide or direct crankcase fluid flow 48 past the first wall distal end 54 towards the crankshaft axis 31 and/or crankshaft 30 as it passes by the first wall proximal end 53 such that the fluid is directed away from the drain aperture 46. The first wall surface 52 may be closer to the crankshaft axis 31 at the first wall proximal end 53 than at the first wall distal end 54.

The first wall surface 52 may be substantially concave and may curve and/or extend inwardly towards and/or into the crankcase 22 for guiding the crankcase fluid flow 48 away from the drain aperture 46, for example as illustrated in Figures 2 and 3. As illustrated in Figure 2, the first wall surface 52 may be curved and may curve into the crankcase 22.

Alternatively, as illustrated in Figure 3, the first wall surface 52 may comprise a plurality of sections 55, 56, 57 arranged concavely and optionally curved. The first fluid guide wall 51 and first wall surface 52 may therefore comprise a plurality of sections 55, 56, 57, each extending in a different direction to an adjacent section 55, 56, 57. A first section 55 may extend substantially parallel to the crankshaft rotation direction 36 from the first wall proximal end 53. A second section 56 may extend from the first section 55 towards the crankcase 22 and may be substantially perpendicular to the crankshaft rotation direction 36. The second section 56 may separate the first section 55 and first wall proximal end 53 from the drain aperture 46. The second section 56 may be mounted directly to the crankcase 22 and form the first wall distal end 54 or, as in Figure 3, may be mounted to the crankcase 22 by a third section 57, which may extend substantially parallel to the crankshaft rotation direction 36 to the first wall distal end 54.

The first fluid guide wall 51 may extend at least partially over the drain aperture 46 and/or the first wall proximal end 53 may overhang the drain aperture 46, for example as illustrated in Figures 2 and 3. In particular, the first fluid guide wall 51 may extend, in the crankshaft rotation direction 36 and downstream direction, at least partially across the drain aperture 46. Therefore, drain fluid flow 38 exiting the drain aperture 46 may be at least partially directed onto the first fluid guide wall 51. The first fluid guide wall 51 may be configured to change the direction of the drain fluid flow 38 exiting the lubricant drain 42 and direct the drain fluid flow 38 into the crankcase fluid flow 48 downstream of the drain aperture 46. The first wall proximal end 53 may extend across at least about 25%, at least about 50% or all of the diameter of the drain aperture 46, the latter being illustrated in Figure 3. A lower edge 49 of the drain aperture 46 may be chamfered, for example as shown in Figure 2, to assist in directing fluid in the downstream direction.

The fluid guide arrangement 50 reduces the pressure of the crankcase fluid flow 48 past the drain aperture 46. The fluid guide arrangement 50 may be configured to induce a negative pressure in the crankcase chamber 23 adjacent to the drain aperture 46 relative to the pressure in the lubricant drain 42. The fluid guide arrangement 50 may form a differential pressure between the crankcase fluid flow 48 in the crankcase 22 and the drain fluid flow 38 in the lubricant drain 42. The fluid guide arrangement 50 may be configured to draw the drain fluid flow 38 out of the lubricant drain 42 and into the crankcase chamber 23 for mixing with the crankcase fluid flow 48. In particular, the fluid guide arrangement 50 may be configured to induce the Venturi effect adjacent to the drain aperture 46 to form such a negative pressure.

The fluid guide arrangement 50 may therefore form a constriction between the fluid guide arrangement 50 and crankshaft 30 for the crankcase fluid flow 48 to pass through. The constriction may comprise a convergent section and/or a throat and a divergent section downstream of the convergent section and/or throat. The fluid guide arrangement 50 may form the throat at its minimum distance from the crankshaft 30, for example where the first fluid guide wall 51 and first wall surface 52 are closest to the crankshaft 30 and crankshaft outer perimeter 37.

As illustrated in Figures 2 and 3 the first fluid guide wall 51 may form the convergent section and/or throat and the divergent section may be formed downstream of the first wall proximal end 53. The first wall surface 52 may form the convergent section and throat, such as by being substantially concave, and the throat may extend upstream of the first wall proximal end 53. The divergent section may be formed between the first wall proximal end 53 and drain aperture 46. The first fluid guide wall 51, and particularly the first wall surface 52 thereof, may be closer to the crankshaft 30 and/or crankshaft axis 31 than a portion of the crankcase inner surface 26 adjacent to and downstream of the drain aperture 46. As a result, the pressure of the crankcase fluid flow 48 may increase as it passes over the first wall surface 52 and may decrease downstream of the first wall proximal end 53 and/or first fluid guide wall 51. Thus the crankcase fluid flow 48 adjacent to the drain aperture 46 may have a negative or lower pressure relative to that of the drain fluid flow 38 in the lubricant drain 42 such that the drain fluid flow 38 is drawn out of the lubricant drain 42 by the crankcase fluid flow 48.

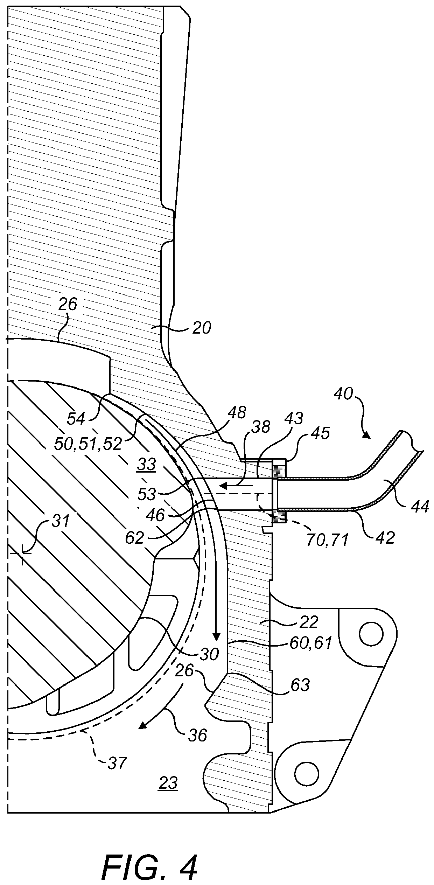

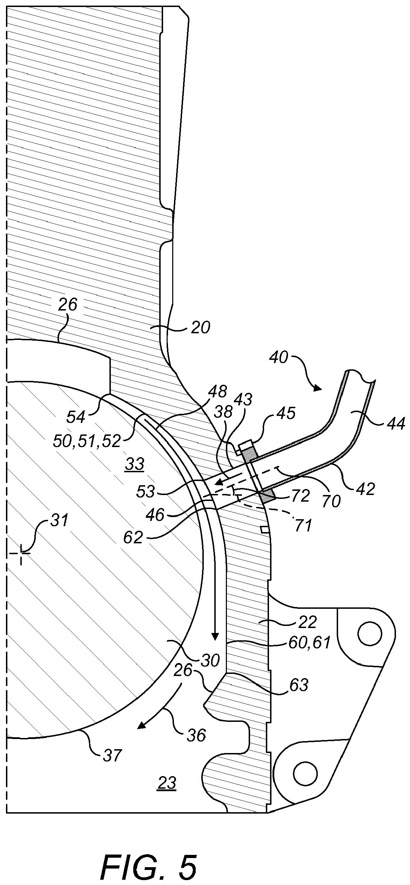

Alternatively, as illustrated in Figures 4 and 5, the fluid guide arrangement 50 may comprise a divergent section and the drain aperture 46 may be located in the divergent section. In such an arrangement the first fluid guide wall 51 may not substantially deflect crankcase fluid flow 48 away from the drain aperture 46. The first fluid guide wall 51 may form the convergent section, throat and at least part of the divergent section. The first fluid guide wall 51 may be closest to the crankshaft 30, crankshaft axis 31 and/or crankshaft outer perimeter 37 at its first wall distal end 54 and the first wall distal end 54 may form the convergent section and throat. The first wall surface 52 may extend from the first wall distal end 54 to the first wall proximal end 53 and the separation between the first wall surface 52 and crankshaft 30, crankshaft axis 31 and/or crankshaft outer perimeter 37 may increase, for example continuously, from the first wall distal end 54 to the first wall proximal end 53. Thus the first wall surface 52 may form at least part of the divergent section. The first wall surface 52 may be concave and may extend inwardly into the crankcase 22.

At the first wall proximal end 53 the separation between the first fluid guide wall 51 and crankshaft outer perimeter 37 may be in the range of about 1 mm to about 10 mm or of about 2 mm to 7 mm. At the first wall distal end 54 the separation between the first fluid guide wall 51 and crankshaft outer perimeter 37 may be in the range of about 0.1 mm to about 1 mm.

The fluid guide arrangement 50 may comprise a second fluid guide wall 60 extending downstream from the drain aperture 46. The second fluid guide wall 60 may comprise a second wall surface 61 and may extend from a second wall proximal end 62 adjacent to the drain aperture 46 to a second wall distal end 63 distal to the drain aperture 46. The second fluid guide wall 60 may be closest to the crankshaft 30, crankshaft axis 31 and/or crankshaft outer perimeter 37 at its second wall proximal end 62. The separation between the second wall surface 61 and crankshaft 30, crankshaft axis 31 and/or crankshaft outer perimeter 37 may increase, for example continuously, from the second wall proximal end 62 to the second wall distal end 63. Thus the second wall surface 61 may form at least part of the divergent section. The second wall surface 61 may be concave and may extend inwardly into the crankcase 22.

The arrangement of Figures 4 and 5 as described above is particularly suitable for inducing a negative pressure in the crankcase fluid flow 48 compared to that of the drain fluid flow 38. This may particularly result from the crankcase fluid flow 48 between the fluid guide arrangement 50 and crankshaft 30 having a lower pressure and higher velocity than elsewhere between the crankshaft 30 and crankcase inner surface 26. The pressure of the crankcase fluid flow 48 will be lowest where the fluid guide arrangement 50 is closest to the crankshaft 30 at the throat, which may be at the first wall distal end 54 as in Figures 4 and 5. Thus the drain aperture 46 may be located at the throat. However, the drain aperture 46 may be located at a distance from the throat, such as in the divergent portion as illustrated, in order to allow for natural drainage from the drain aperture 46.

As in Figure 4 a centreline 70 of the at least one drain passageway 43 may extend substantially horizontally along a horizontal axis 71. As will be appreciated, the horizontal axis 71 may not always be horizontal as the engine 16 changes its orientation during use, such as when the machine it is located in travels over undulations in terrain. However, the horizontal axis 71 may be substantially horizontal when the engine 16 is in its illustrated upright configuration. The horizontal axis 71 may extend in a direction substantially perpendicular to the crankshaft axis 31 and perpendicular to the piston reciprocating axis 19, although the horizontal, crankshaft and/or piston reciprocating axes 71, 31, 19 may not intersect.

However, as illustrated in Figure 5 the centreline 70 of the at least one drain passageway 43 may extend at an acute angle 72 to the horizontal axis 71. Such an arrangement may assist with the draining of the drain fluid flow 38 by gravity. The acute angle 72 may be approximately 90 degrees such that the centreline 70 of the at least one drain passageway 43 extends vertically. The acute angle 72 may be at least about 10 degrees, at least about 25 degrees, at least about 45 degrees and/or up to about 90 degrees.

As illustrated in Figures 2 and 3, the drain aperture 46 and fluid guide arrangement 50 may be aligned with a rod journal 32 along the crankshaft 30, such as when the fluid guide arrangement 50 is configured to deflect crankcase fluid flow 48 away from the drain aperture 46. Thus in such an arrangement the fluid guide arrangement 50 may deflect crankcase fluid flow 48 between itself and the rod journal 32.

However, as illustrated in Figures 4 and 5, the drain aperture 46 and fluid guide arrangement 50 may be aligned with a crankshaft web 33 along the crankshaft 30. Such an arrangement may be suitable when the fluid guide arrangement 50 is configured to induce a negative pressure in the crankcase fluid flow 48 because the spacing between the fluid guide arrangement 50 and crankshaft 30 is smaller. As in Figure 4 the crankshaft web 33 may comprise a counterweight and may not be circular. However, as illustrated in Figure 5, the crankshaft web 33 may be substantially round and therefore a negative pressure may be maintained substantially continuously between the crankshaft 30 and fluid guide arrangement 50.

In Figures 2 to 5 the fluid guide arrangement 50, first fluid guide wall 51 and/or second fluid guide wall 60 are located adjacent to the drain aperture 46 and there is substantially no separation therebetween. However, although not illustrated, the fluid guide arrangement 50, first fluid guide wall 51 and/or second fluid guide wall 60 may be located in proximity to and may be separated from the drain aperture 46. For example, a portion of the crankcase 22 and crankcase inner surface 26 may extend between the drain aperture 46 and fluid guide arrangement 50, first fluid guide wall 51 and/or second fluid guide wall 60. The separation may be within a range that still ensures that the fluid guide arrangement 50, first fluid guide wall 51 and/or second fluid guide wall 60 are sufficiently close that they control the crankcase fluid flow 48 past the drain aperture 46 and thereby control the drain fluid flow 38 from the lubricant drain 42. Thus the fluid guide arrangement 50, first fluid guide wall 51 and/or second fluid guide wall 60 may be less than about 50 mm or less than about 25 mm away from the drain aperture 46.

The fluid guide arrangement 50, such as the first and/or second fluid guide walls 51, 60, may be formed integrally with the crankcase 22 and/or engine block 20 as illustrated in Figures 2, 4 and 5. As in Figure 2, the first fluid guide wall 51 may comprise a lip or protrusion extending into the crankcase chamber 23. In particular, the fluid guide arrangement 50 may be cast with the crankcase 22 and/or engine block 20 and/or the fluid guide arrangement 50 may be part of a unitary structure including the crankcase 22 and/or engine block 20. Alternatively, as illustrated in Figure 3, the fluid guide arrangement 50, such as the first and/or second fluid guide walls 51, 60, may be formed separately to the crankcase 22 and/or engine block 20 and subsequently attached thereto. For example, the fluid guide arrangement 50 may comprise at least one plate or member and may be welded or otherwise joined to the crankcase 22 and/or engine block 20. As a result, the fluid guide arrangement 50 may be retrofitted to an existing engine 16 that does not already comprise such a fluid guide arrangement 50.

The fluid guide arrangement 50 may extend along a width (not shown in Figures 2 to 5) along the crankcase 22 and along the crankshaft axis 31. The width may be at least the maximum diameter of the drain aperture 46 and/or crankshaft web 33. The fluid guide arrangement 50 may extend by at least half a diameter of the drain aperture 46 on either side of the drain aperture 46. The width of the fluid guide arrangement 50 may be at least twice the diameter of the drain aperture 46.

The fluid guide arrangement 50 may be configured to avoid impacting the flow under gravity of lubricant from the drain aperture 46. If, as discussed above, the drain aperture 46 is on the opposing side of the crankcase 22 and the first fluid guide wall 51 is located below the drain aperture 46 when the engine 16 is in its upright configuration, the fluid guide arrangement 50 may be arranged in a similar manner to that shown in Figures 4 and 5. As a result, the fluid guide arrangement 50 does not impact the flow of lubricant from the drain aperture 46 under gravity.

### Industrial Applicability

Rotation of the crankshaft 30 may result in windage effects, which may be in the form of turbulence in the air around the crankshaft 30 and the lubricant being thrown about the crankshaft 30 within the crankcase 22. Such windage effects may be caused by air resistance or friction around the crankshaft 30. In prior art systems the windage effects may direct the crankcase fluid flow 48 towards the drain aperture 46. The turbulence may cause a higher pressure adjacent to the drain aperture 46 such that, in prior art systems, high pressure air and lubricant is forced back up into the lubricant drain 42. As a result, in such prior art systems a pressure differential may be created in the turbocharger 12, which may compromise the seals therein such that lubricant may leak therefrom.

However, the fluid guide arrangement 50 of the present disclosure controls, adapts or adjusts crankcase fluid flow 48 past the drain aperture 46 and therefore controls the drain fluid flow 38 from the lubricant drain 42, such as by preventing the crankcase fluid flow 48 from backing up through the lubricant drain 42 and/or by drawing the drain fluid flow 38 therefrom. The fluid guide arrangement 50 may control the crankcase 22 and drain fluid flow 48, 38 by directing the crankcase fluid flow 48 away from the drain aperture 46 and/or by inducing a negative pressure adjacent to the drain aperture 46 in order to draw the drain fluid flow 38 from the lubricant drain 42 and into the crankcase fluid flow 48. Thus the fluid guide arrangement 50 may reduce windage effects at the drain aperture 46 such that higher pressure air and lubricant are substantially not forced into the lubricant drain 42.

## Claims

1. An engine assembly (10) comprising:
a crankcase (22) comprising a crankcase chamber (23) formed at least partially within a crankcase inner surface (26);
a crankshaft (30) rotatably mounted in the crankcase chamber (23), wherein during rotation the crankshaft (30) is configured to drive a crankcase fluid flow (48) in the crankcase chamber (23);
a lubrication system (40) comprising a lubricant drain (42) for a drain fluid flow (38) therethrough, the lubricant drain (42) extending through the crankcase (22) to a drain aperture (46) at the crankcase chamber (23); and
a fluid guide arrangement (50) mounted to the crankcase (22), extending into the crankcase chamber (23) from the crankcase inner surface (26) and located adjacent the drain aperture (46), the fluid guide arrangement (50) being configured for guiding crankcase fluid flow (48) away from the drain aperture (46) and/or for reducing the pressure of the crankcase fluid flow (48) past the drain aperture (46), such that drain fluid (38) flows from the lubricant drain (42);
wherein the fluid guide arrangement (50) comprises a first fluid guide wall (51) mounted to the crankcase (22) in the crankcase chamber (23) and located at least partially over and/or extending upstream from the drain aperture (46), wherein the first fluid guide wall (51) comprises a first wall surface (52) which is concave; and
wherein the first fluid guide wall (51) extends from a first wall proximal end (53) adjacent the drain aperture (46) to a first wall distal end (54) and the separation between the first fluid guide wall (51) and crankshaft (30) increases from the first wall proximal end (53) to the first wall distal end (54) or increases from the first wall distal end (54) to the first wall proximal end (53).

2. An engine assembly (10) as claimed in claim 1 wherein the first fluid guide wall (51) extends into the crankcase chamber (23) towards the crankshaft (30) and the first wall surface (52) is configured to direct the crankcase fluid flow (48) away from the drain aperture (46) and/or towards the crankshaft (30).

3. An engine assembly (10) as claimed in claim 2 wherein the first wall surface (52) extends inwardly towards and/or into the crankcase (23) for directing the crankcase fluid flow (48) away from the drain aperture (46) and/or towards the crankshaft (30).

4. An engine assembly (10) as claimed in any one of claims 2 to 3 wherein the first fluid guide wall (51) extends at least partially over the drain aperture (46) such that drain fluid flow (38) exiting the drain aperture (46) is at least partially directed onto the first fluid guide wall (51) and/or the first fluid guide wall (51) is configured to change the direction of the drain fluid flow (36) exiting the lubricant drain (42) and direct the drain fluid flow (38) into the crankcase fluid flow (48).

5. An engine assembly (10) as claimed in any one of the preceding claims wherein the fluid guide arrangement (50) is configured to guide crankcase fluid flow (48) past the drain aperture (46) and induce a negative pressure in the crankcase chamber (23) adjacent to the drain aperture (46) relative to a pressure in the lubricant drain (42).

6. An engine assembly (10) as claimed in claim 5 wherein the fluid guide arrangement (50) is arranged to form a constriction between the fluid guide arrangement (50) and the crankshaft (30) for reducing the pressure of the crankcase fluid flow (48) passing therebetween.

7. An engine assembly (10) as claimed in claim 6 wherein the fluid guide arrangement (50) comprises a throat and/or convergent section upstream of the drain aperture (46) and/or comprises a divergent section, the drain aperture (46) being located in or upstream of the divergent section.

8. An engine assembly (10) as claimed in any preceding claim wherein the first fluid guide wall (51) is closer to the crankshaft (30) than a portion of the crankcase downstream of the drain aperture (46).

9. An engine assembly (10) as claimed in any one of the preceding claims wherein the fluid guide arrangement (50) comprises a second fluid guide wall (60) extending from a second wall proximal end (62) adjacent the drain aperture (46) to a second wall distal end (62) and the separation between the second fluid guide wall (60) and crankshaft (30) increases from the first wall proximal end (53) to the first wall distal end (54).

10. An engine assembly (10) as claimed in any one of the preceding claims wherein the fluid guide arrangement (50) is formed integrally with the crankcase (22) and/or comprises at least one plate attached to the crankcase (22).

11. An engine assembly (10) according to any one of the preceding claims further comprising a turbocharger (12), wherein the lubrication system (40) distributes lubricant to the turbocharger (12) and the lubricant drain (42) is configured to direct lubricant from the turbocharger (12) to the crankcase chamber (23).

12. A method of operating the engine assembly (10) of any one of the preceding claims comprising:
rotating the crankshaft (30) and thereby drive the crankcase fluid flow (48) in the crankcase chamber (23); and
operating the lubrication system (40) such that drain fluid flow (38) passes through the lubricant drain (42) to the drain aperture (46),
wherein the fluid guide arrangement (50) guides the crankcase fluid flow (48) away from the drain aperture (46) and/or reduces the pressure of the crankcase fluid flow (48) past the drain aperture (46), such that the drain fluid (38) flows from the lubricant drain (42).

## Patentansprüche

1. Motoranordnung (10), umfassend:
ein Kurbelgehäuse (22), umfassend eine Kurbelgehäusekammer (23), die mindestens teilweise innerhalb einer Kurbelgehäuseinnenoberfläche (26) ausgebildet ist;
eine Kurbelwelle (30), die in der Kurbelgehäusekammer (23) drehbar montiert ist, wobei während der Drehung die Kurbelwelle (30) konfiguriert ist, um eine Kurbelgehäusefluidströmung (48) in der Kurbelgehäusekammer (23) anzutreiben;
ein Schmiersystem (40), umfassend einen Schmiermittelablass (42) für eine Ablassfluidströmung (38) dahindurch, wobei sich der Schmiermittelablass (42) durch das Kurbelgehäuse (22) zu einer Ablassöffnung (46) an der Kurbelgehäusekammer (23) erstreckt; und
eine Fluidführungsanordnung (50), die an dem Kurbelgehäuse (22) montiert ist, die sich in die Kurbelgehäusekammer (23) von der Kurbelgehäuseinnenoberfläche (26) erstreckt und sich angrenzend an die Ablassöffnung (46) befindet, wobei die Fluidführungsanordnung (50) zum Führen der Kurbelgehäusefluidströmung (48) von der Ablassöffnung (46) weg und/oder zum Verringern des Drucks der Kurbelgehäusefluidströmung (48) an der Ablassöffnung (46) vorbei konfiguriert ist, derart, dass das Ablassfluid (38) von dem Schmiermittelablass (42) strömt;
wobei die Fluidführungsanordnung (50) eine erste Fluidführungswand (51), die an dem Kurbelgehäuse (22) in der Kurbelgehäusekammer (23) montiert ist und sich mindestens teilweise über der Ablassöffnung (46) befindet und/oder sich stromaufwärts von dieser erstreckt, umfasst, wobei die erste Fluidführungswand (51) eine erste Wandoberfläche (52), die konkav ist, umfasst; und
wobei die erste Fluidführungswand (51) sich von einem proximalen Ende (53) einer ersten Wand angrenzend an die Ablassöffnung (46) zu einem distalen Ende (54) der ersten Wand erstreckt und die Trennung zwischen der ersten Fluidführungswand (51) und der Kurbelwelle (30) von dem proximalen Ende (53) der ersten Wand zu dem distalen Ende (54) der ersten Wand zunimmt oder von dem distalen Ende (54) der ersten Wand zu dem proximalen Ende (53) der ersten Wand zunimmt.

2. Motoranordnung (10) nach Anspruch 1, wobei die erste Fluidführungswand (51) sich in die Kurbelgehäusekammer (23) in Richtung der Kurbelwelle (30) erstreckt und die erste Wandoberfläche (52) konfiguriert ist, um die Kurbelgehäusefluidströmung (48) von der Ablassöffnung (46) weg und/oder in Richtung der Kurbelwelle (30) zu leiten.

3. Motoranordnung (10) nach Anspruch 2, wobei die erste Wandoberfläche (52) sich nach innen in Richtung des Kurbelgehäuses (23) und/oder in dieses hinein erstreckt, um die Kurbelgehäusefluidströmung (48) von der Ablassöffnung (46) weg und/oder in Richtung der Kurbelwelle (30) zu leiten.

4. Motoranordnung (10) nach einem der Ansprüche 2 bis 3, wobei die erste Fluidführungswand (51) sich mindestens teilweise über die Ablassöffnung (46) erstreckt, derart, dass die Ablassfluidströmung (38), die aus der Ablassöffnung (46) austritt, mindestens teilweise auf die erste Fluidführungswand (51) gerichtet ist und/oder die erste Fluidführungswand (51) konfiguriert ist, um die Richtung der Ablassfluidströmung (36), die aus dem Schmiermittelablass (42) austritt, zu ändern und die Ablassfluidströmung (38) in die Kurbelgehäusefluidströmung (48) zu leiten.

5. Motoranordnung (10) nach einem der vorstehenden Ansprüche, wobei die Fluidführungsanordnung (50) konfiguriert ist, um die Kurbelgehäusefluidströmung (48) an der Ablassöffnung (46) vorbeizuführen und einen Unterdruck in der Kurbelgehäusekammer (23) angrenzend an die Ablassöffnung (46) relativ zu einem Druck in dem Schmiermittelablass (42) einzuleiten.

6. Motoranordnung (10) nach Anspruch 5, wobei die Fluidführungsanordnung (50) angeordnet ist, um eine Verengung zwischen der Fluidführungsanordnung (50) und der Kurbelwelle (30) zum Verringern des Drucks der Kurbelgehäusefluidströmung (48), die dazwischen verläuft, auszubilden.

7. Motoranordnung (10) nach Anspruch 6, wobei die Fluidführungsanordnung (50) einen Hals und/oder konvergierenden Abschnitt stromaufwärts der Ablassöffnung (46) umfasst und/oder einen divergierenden Abschnitt umfasst, wobei sich die Ablassöffnung (46) in dem divergenten Abschnitt oder stromaufwärts dessen befindet.

8. Motoranordnung (10) nach einem der vorstehenden Ansprüche, wobei die erste Fluidführungswand (51) näher an der Kurbelwelle (30) als ein Abschnitt des Kurbelgehäuses stromabwärts der Ablassöffnung (46) liegt.

9. Motoranordnung (10) nach einem der vorstehenden Ansprüche, wobei die Fluidführungsanordnung (50) eine zweite Fluidführungswand (60) umfasst, die sich von einem proximalen Ende (62) einer zweiten Wand angrenzend an die Ablassöffnung (46) zu einem distalen Ende (62) der zweiten Wand erstreckt, und die Trennung zwischen der zweiten Fluidführungswand (60) und der Kurbelwelle (30) von dem proximalen Ende (53) der ersten Wand zu dem distalen Ende (54) der ersten Wand zunimmt.

10. Motoranordnung (10) nach einem der vorstehenden Ansprüche, wobei die Fluidführungsanordnung (50) mit dem Kurbelgehäuse (22) einstückig ausgebildet ist und/oder mindestens eine Platte, die an dem Kurbelgehäuse (22) befestigt ist, umfasst.

11. Motoranordnung (10) nach einem der vorstehenden Ansprüche, ferner umfassend einen Turbolader (12), wobei das Schmiersystem (40) ein Schmiermittel an den Turbolader (12) verteilt und der Schmiermittelablass (42) konfiguriert ist, um das Schmiermittel von dem Turbolader (12) zu der Kurbelgehäusekammer (23) zu leiten.

12. Verfahren zum Betreiben der Motoranordnung (10) nach einem der vorstehenden Ansprüche, umfassend:
Drehen der Kurbelwelle (30) und dadurch Antreiben der Kurbelgehäusefluidströmung (48) in der Kurbelgehäusekammer (23); und
Betreiben des Schmiersystems (40), derart, dass die Ablassfluidströmung (38) durch den Schmiermittelablass (42) zu der Ablassöffnung (46) verläuft,
wobei die Fluidführungsanordnung (50) die Kurbelgehäusefluidströmung (48) von der Ablassöffnung (46) weg führt und/oder den Druck der Kurbelgehäusefluidströmung (48) an der Ablassöffnung (46) vorbei verringert, derart, dass das Ablassfluid (38) von dem Schmiermittelablass (42) strömt.

## Revendications

1. Ensemble moteur (10) comprenant :
un carter (22) comprenant une chambre de carter (23) formée au moins partiellement à l'intérieur d'une surface intérieure de carter (26) ;
un vilebrequin (30) monté de manière rotative dans la chambre de carter (23), dans lequel, pendant la rotation, le vilebrequin (30) est conçu pour entraîner un écoulement de fluide de carter (48) dans la chambre de carter (23) ;
un système de lubrification (40) comprenant un drain de lubrifiant (42) pour un écoulement de fluide de drainage (38) à travers celui-ci, le drain de lubrifiant (42) s'étendant à travers le carter de carter (22) jusqu'à une ouverture de drainage (46) au niveau de la chambre de carter (23) ; et
un agencement de guidage de fluide (50) monté sur le carter (22), s'étendant dans la chambre de carter (23) depuis la surface interne de carter (26) et situé adjacent à l'ouverture de drainage (46), l'agencement de guidage de fluide (50) étant conçu pour guider un écoulement de fluide de carter (48) à l'écart de l'orifice de drainage (46) et/ou pour réduire la pression de l'écoulement de fluide de carter (48) au-delà de l'ouverture de drainage (46), de telle sorte que le fluide de drainage (38) s'écoule depuis le drain de lubrifiant (42) ;
dans lequel l'agencement de guidage de fluide (50) comprend une première paroi de guidage de fluide (51) montée sur le carter (22) dans la chambre de carter (23) et située au moins partiellement sur et/ou s'étendant en amont de l'ouverture de drainage (46), dans lequel la première paroi de guidage de fluide (51) comprend une première surface de paroi (52) qui est concave ; et
dans lequel la première paroi de guidage de fluide (51) s'étend d'une première extrémité proximale de paroi (53) adjacente à l'ouverture de drainage (46) à une première extrémité distale de paroi (54) et la séparation entre la première paroi de guidage de fluide (51) et le vilebrequin (30) augmente de la première extrémité proximale de paroi (53) à la première extrémité distale de paroi (54) ou augmente de la première extrémité distale de paroi (54) à la première extrémité proximale de paroi (53).

2. Ensemble moteur (10) selon la revendication 1, dans lequel la première paroi de guidage de fluide (51) s'étend dans la chambre de carter (23) en direction du vilebrequin (30) et la première surface de paroi (52) est conçue pour diriger l'écoulement de fluide de carter (48) à l'écart de l'ouverture de drainage (46) et/ou vers le vilebrequin (30).

3. Ensemble moteur (10) selon la revendication 2, dans lequel la première surface de paroi (52) s'étend vers l'intérieur vers et/ou dans le carter (23) pour diriger l'écoulement de fluide de carter (48) à l'écart de l'ouverture de drainage (46) et/ou vers le vilebrequin (30).

4. Ensemble moteur (10) selon l'une quelconque des revendications 2 à 3, dans lequel la première paroi de guidage de fluide (51) s'étend au moins partiellement sur l'ouverture de drainage (46) de telle sorte que l'écoulement de fluide de drainage (38) quittant l'ouverture de drainage (46) est au moins partiellement dirigé sur la première paroi de guidage de fluide (51) et/ou la première paroi de guidage de fluide (51) est conçue pour changer la direction de l'écoulement de fluide de drainage (36) quittant le drain de lubrifiant (42) et diriger le flux de fluide de drainage (38) dans l'écoulement de fluide de carter (48).

5. Ensemble moteur (10) selon l'une quelconque des revendications précédentes, dans lequel l'agencement de guidage de fluide (50) est conçu pour guider un écoulement de fluide de carter (48) au-delà de l'ouverture de drainage (46) et induire une pression négative dans la chambre de carter (23) adjacente à l'ouverture de drainage (46) par rapport à une pression dans le drain de lubrifiant (42).

6. Ensemble moteur (10) selon la revendication 5, dans lequel l'agencement de guidage de fluide (50) est agencé pour former un étranglement entre l'agencement de guidage de fluide (50) et le vilebrequin (30) pour réduire la pression de l'écoulement de fluide de carter (48) passant entre eux.

7. Ensemble moteur (10) selon la revendication 6, dans lequel l'agencement de guidage de fluide (50) comprend une section de gorge et/ou convergente en amont de l'ouverture de drainage (46) et/ou comprend un divergent, l'orifice de drainage (46) étant situé dans ou en amont du divergent.

8. Ensemble moteur (10) selon l'une quelconque revendication précédente, dans lequel la première paroi de guidage de fluide (51) est plus proche du vilebrequin (30) qu'une partie du carter en aval de l'ouverture de drainage (46).

9. Ensemble moteur (10) selon l'une quelconque des revendications précédentes, dans lequel l'agencement de guidage de fluide (50) comprend une seconde paroi de guidage de fluide (60) s'étendant d'une seconde extrémité proximale de paroi (62) adjacente à l'ouverture de drainage (46) à une seconde extrémité distale de paroi (62) et la séparation entre la seconde paroi de guidage de fluide (60) et le vilebrequin (30) augmente de la première extrémité proximale de paroi (53) à la première extrémité distale de paroi (54).

10. Ensemble moteur (10) selon l'une quelconque des revendications précédentes, dans lequel l'agencement de guidage de fluide (50) est formé d'un seul tenant avec le carter (22) et/ou comprend au moins une plaque fixée au carter (22).

11. Ensemble moteur (10) selon l'une quelconque des revendications précédentes, comprenant en outre un turbocompresseur (12), dans lequel le système de lubrification (40) distribue du lubrifiant au turbocompresseur (12) et le drain de lubrifiant (42) est conçu pour diriger le lubrifiant du turbocompresseur (12) vers la chambre de carter (23).

12. Procédé de fonctionnement de l'ensemble moteur (10) selon l'une quelconque des revendications précédentes, comprenant :
la rotation du vilebrequin (30) et ainsi l'entraînement de l'écoulement de fluide de carter (48) dans la chambre de carter (23) ; et
le fonctionnement du système de lubrification (40) de telle sorte que l'écoulement de fluide de drainage (38) passe à travers le drain de lubrifiant (42) à l'ouverture de drainage (46),
dans lequel l'agencement de guidage de fluide (50) guide l'écoulement de fluide de carter (48) à l'écart de l'orifice de drainage (46) et/ou réduit la pression de l'écoulement de fluide de carter (48) au-delà de l'ouverture de drainage (46), de telle sorte que le fluide de drainage (38) s'écoule de l'évacuation de lubrifiant (42).
